Europäisches Patentamt

European Patent Office

Office européen des brevets

(11) Publication number: **0 312 252**
**A2**

## (12) EUROPEAN PATENT APPLICATION

(21) Application number: 88309337.9

(22) Date of filing: 06.10.88

(51) Int. Cl.4: **G01N 35/00 , G01N 1/00 , C12Q 1/68**

(30) Priority: 13.10.87 GB 8724023

(43) Date of publication of application:
**19.04.89 Bulletin 89/16**

(84) Designated Contracting States:
**BE CH DE ES FR GB IT LI NL SE**

(71) Applicant: **O'Donovan, Kevin**
**111-113 Waldegrave Road**
**Teddington Middlesex(GB)**

(72) Inventor: **O'Donovan, Kevin**
**111-113 Waldegrave Road**
**Teddington Middlesex(GB)**

(74) Representative: **Williams, John Francis et al**
**J.F. Williams & Co 34 Tavistock Street**
**London WC2E 7PB(GB)**

(54) **Apparatus for handling blot processing.**

(57) Apparatus for handling blot processing in molecular biology comprises a holder for an apparatus for handling blot processing comprising a holder for a blotting sheet container, at least one liquid container for processing liquid, a vacuum pump, a waste liquid receiver, and connecting pipes; wherein the vacuum pump serves to draw processing liquid through the blotting sheet container and to deposit it in the waste liquid receiver. The apparatus can handle a whole sequence of steps automatically, controlled by a microprocessor.

The blotting sheet container may be formed by an elongate cylindrical bottle, a removable centre core member which forms an annular space within the bottle, and fluid inlet and outlet connections to the annular space.

## Apparatus for handling blot processing

This invention relates to apparatus for use in the molecular biology technique known as 'blotting'

This is a range of procedures which makes possible the detection of specific sequences of nucleic acids or proteins in biological samples. Examples of the application of blotting techniques are in hunting for the gene that codes for cystic fibrosis, muscular dystrophy and numerous other inherited diseases, in crime detection in order to positively identify the perpetrators of the active rape by analysis of semen samples, or in paternity determination.

Blotting techniques make use of a radioactive liquid probe applied to a large piece of filter paper on to which an unknown sample has been layered. The technique is messy, time consuming and potentially dangerous, because of the radioactivity.

The steps in blotting are as follows:

1. Gel electrophoresis in order to separate the test nucleic acids or proteins.

2. The gel is then blotted onto a special nitrocellulose or nylon filter sheet, which consistently transfers the test material onto the blot sheet.

3. The blot sheet is inserted in a fluid tight e.g. plastic envelope.

4. Hybridisation with a probe solution in the envelope, usually for around 18 hours at 65°. Hybridisation is therefore the reaction of specific genetic material or gene probes with unknown DNA or RNA. The probe will bind to the test material if it contains a complementary sequence of bases.

5. A series of washes to remove unhybridised gene probe material.

6. Visualisation.

The probe may be labelled with a number of physically different labels, the most common being the radioisotope phosphorous 32 (p32), where visualisation is through auto-radiography. Colourimetric or fluorimetric methods may also be used, although these are less common.

The present invention aims to provide clean, safe and efficient means for undertaking steps 4 and 5.

Accordingly the invention proposes an apparatus for handling blot processing comprising a holder for a blotting sheet container, at least one liquid container for processing liquid, a vacuum pump, a waste liquid receiver, and connecting pipes; wherein the vacuum pump serves to draw processing liquid through the blotting sheet container and to deposit it in the waste liquid receiver.

Preferably there are a number of processing liquids in separate containers and a valve means is used to select which liquid is used. Further, the vacuum pump action may be reversed to cause inflation of the container containing the blotting sheet for a purpose described later. The whole apparatus may be controlled by a programme switching device, such as a microprocessor, to conduct a series of handling steps sequentially.

In order that the invention shall be clearly understood, an exemplary embodiment thereof will now be described with reference to the accompanying drawings, in which:

Figure 1 shows a perspective view of an apparatus according to the invention;

Figure 2 shows a front view with a blotting sheet container in position;

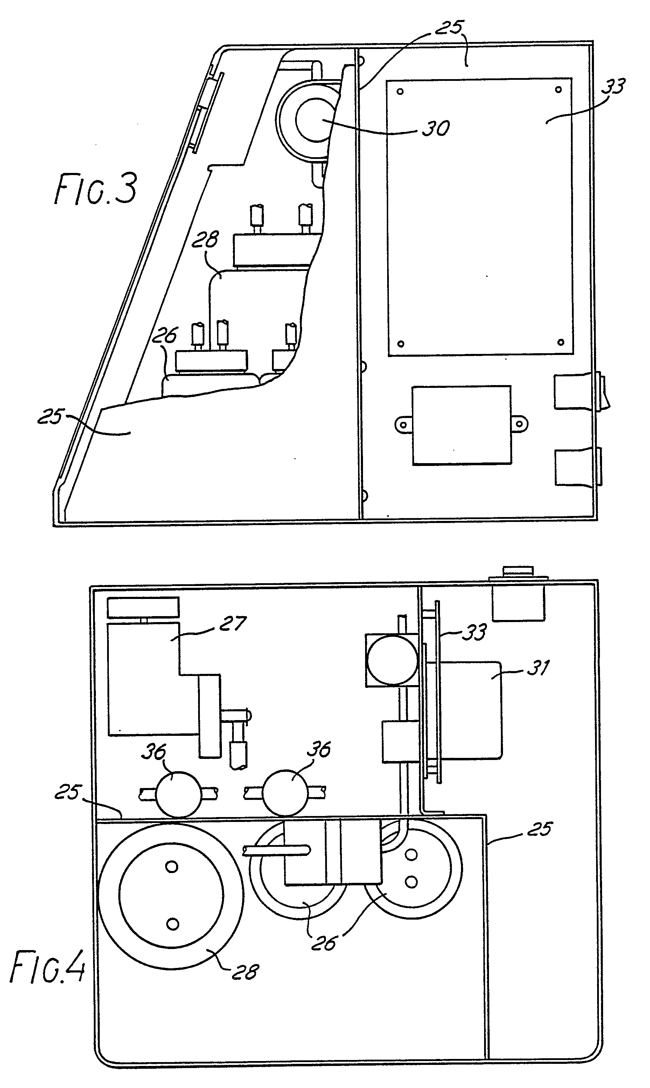

Figure 3 shows a side view with the side panel removed;

Figure 4 shows a plan view of the apparatus with the casing removed;

Figure 5 shows a valving mechanism;

Figure 6 shows an alternative form of blotting sheet container; and

Figure 7 shows a centring device for use with the container of Figure 6.

The apparatus has a box-like casing 10 which on its front surface includes a sloping support 11, a control keypad 12 and a liquid crystal display 13. The support 11 receives a blotting sheet container 14 held in a metal frame 15, as is conventional. The container 14 is a flat rectangular plastic bag which is folded over and sealed at its open bottom side 15 and has two liquid ports 17, 18 for inlet and outlet at its top side 19. The ports 17, 18 are detachably connected to fluid pipes 21, 22 which emerge from the inside of the casing 10.

Within the casing are dividing walls 25 which serve both to separate different components of the apparatus, and also to support various components. The components include a number of bottles 26 containing processing liquids, a vacuum pump 27, a waste bottle 28 for receiving liquids drawn through the containers 14, and necessary valves and piping. The liquids are maintained at the correct processing temperature by a heater device 30. Power is supplied at low voltage via a transformer 31.

The apparatus is controlled by programs stored in memory, and directly by the manually operated keypad 12. The control is carried out by a printed circuit board 33; necessary readouts and responses to instructions can be seen on the liquid crystal display 13.

In order to effect switching between, for example, a reagent and a wash water, suitable valves 36 are provided, controlled by the PCB 33. The program to be carried out, and the sequence, timing, temperature and flow rates will all be decided by the particular blot test required. In principle, the pump draws the required liquid through the container, and since the used liquid may then be more or less radioactive, it is dumped in the vacuum trap, waste bottle for later disposal.

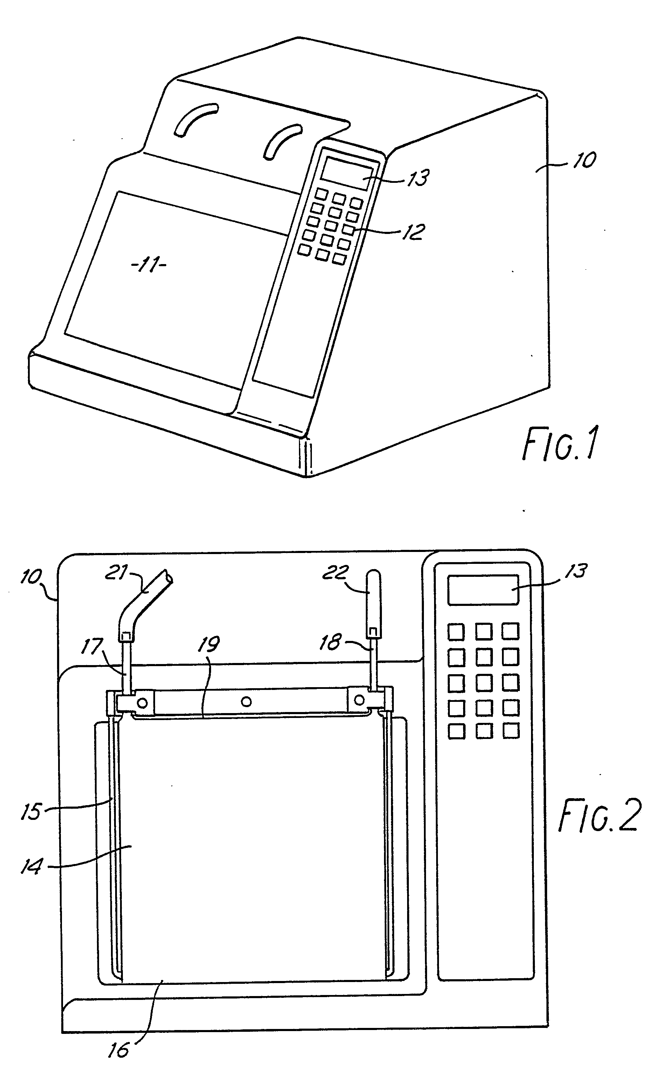

In one example, a particular supply bottle 26 is connected by the valve system to the fluid pipe 21. The fluid pipe 22 is connected to the vacuum trap waste bottle 28, which is itself connected to the vacuum pump 27. With the bag 14 connected as shown in Fig.2, when the pump 27 is operated, air is drawn out of the bag 14 and sufficient processsing liquid is drawn from bottle 26 into the bag. After a predetermined processing period, the valving closes the connection to bottle 26 and operation of the pump will draw out the liquid in the bag, and deposit it in the waste bottle 28.

The apparatus has a further advantage. For the hybridisation step, it can be difficult to distribute the probe liquid over the whole blotting sheet because the sheet is already wet and it and the walls of the bag 14 tend to stick together because of surface tension. By reversing the vacuum pump 27, a slight pressure can be generated in the bag 14, after the probe has been introduced. This separates the walls, and with the inlet and outlet tubes then clamped, the bag can be turned to and fro, and inverted, to ensure even distribution of the probe over the blotting sheet.

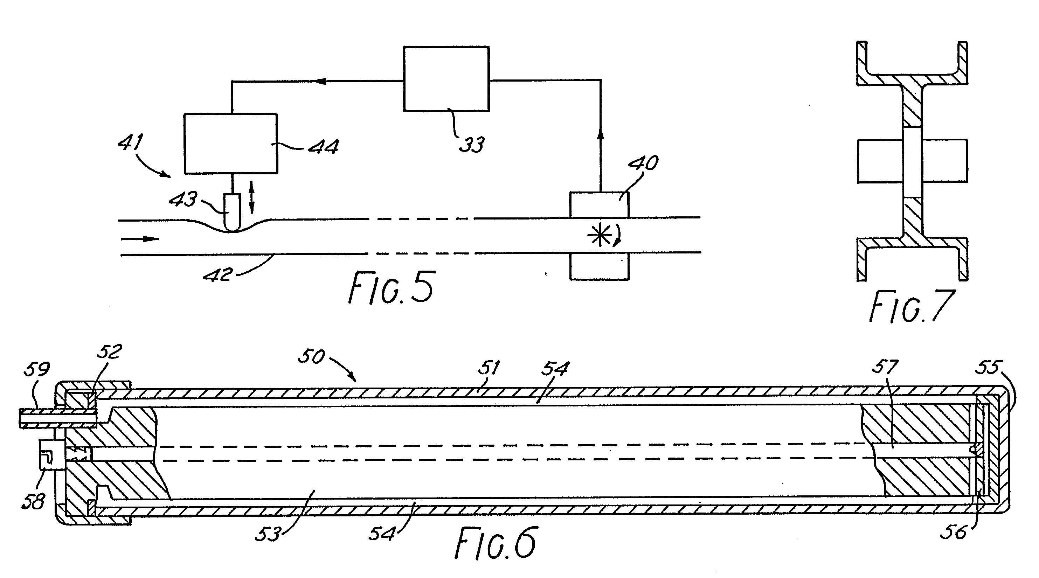

In order to accurately control the rate of flow during a continuous wash processs, the arrangement of Fig.5 may be used. A flow meter 40 is mounted in the flow path and delivers a signal which is fed to the control PCB 33. If the flow rate differs from a desired value, PCB delivers an operating signal to a valve device 41 which acts upon the flexible, tubing 42 at an appropriate point. This has a gate 43 movable transversely of the tubing 42 by a stepper motor 44. The operating signal adjusts the degree to which the tubing 42 is squashed and thus obturated by the gate 43. This process is self-repeating until the desired flow rate is achieved.

In place of a bag-like container 14 as described earlier, a different incubation container may be used, and that part of the processing apparatus described above can be modified accordingly to accept the container. Figure 6 illustrates a container 50 in the form of an elongate bottle 51 with a screw cap 52. Within this is located a core 53 which lies centrally down the length of the bottle, leaving an annular space 54. At the closed end 55 of the bottle, the core 53 is supported by a centring device 56. This consists of two flat discs plastics discs. A preferable design of the device 56 is shown in Fig.7 in cross-section, which provides both for centring and resilient mounting to allow for heat expansion of the core 53.

The core has a bore 57 along its axis and a first fluid connection 58 which emerges at the cap 52; the space 54 has a second fluid connection 59 also through the cap 52. In an alternative version, the bore 57 may be dispensed with, and the connector 58 may be at the otherwise closed end 55 of the bottle. In either case, the two connections allow a fluid to flow from end to end of the bottle through the annular space 54. The function of the core 53 is to reduce that space to a minimum.

In operation for an incubation process, the core is first removed and one or more blotting sheets carrying a test material are inserted against the inside wall of the bottle 51. The core 53 is inserted and the cap 52 secured. A necessary amount of a treatmnt fluid e.g. a probe solution, is introduced and the two fluid connections 58,59 are sealed. The bottle, possibly together with a number of others, can then be placed horizontally in an incubator drum which rotates, within an encloure maintained at an accurate temperature. As the drum rotates with the bottle the small amount of fluid in the annular space will be caused to flow over the blotting sheet(s) in the bottle. After the appropriate incubation period, the bottle can be transferred to a processing apparatus for the automatic wash programs as previously described, using the first and second fluid connection 58 & 59.

The advantages of the container just described are that the liquid needed to wet the sheets is minimised (so minimising the waste disposal problem) and as a corollary the flow speed is increased for a constant volume. The glass bottle is a better radioactive shield than a plastic bag. Further, since the core 53 is a synthetic plastic, preferably a PETP polyester or copolymer acetal, this provides good temperature stability for the liquids used, because the solid plastic acts as a heat sink.

## Claims

1. An apparatus for handling blot processing comprising a holddr for a blotting sheet container, at least one liquid container for processing liquid, a vacuum pump, a waste liquid receiver, and connecting pipes; wherein the vacuum pump serves to draw processing liquid through the blotting sheet container and to deposit it in the wste liquid receiver.

2. An apparatus as claimed in Claim 1 wherein the holder is constituted by a flat surface of the apparatus to which lead fluid inlet and outlet pipes.

3. An apparatus as claimed in Claim 1 comprising selector valves which are controlled to select the required processing liquid.

4. An apparatus as claimed in Claim 3 wherein a series of operating steps are controllable by a microprocessor sequencing controller.

5. An apparatus as claimed in Claim 1 wherein the operation of the vacuum pump can be reversed to cause a pressure increase in the blotting sheet container.

6. An apparatus as claimed in Claim 1 wherein flow rate is controlled by a stepper motor acting on a gate which progressively squashes, or relieves pressure on, the walls of a flexible pipe.

7. A container for a blotting sheet for molecular biological processes, comprising an elongate cylindrical bottle, a removable centre core member which forms an annular space within the bottle, and fluid inlet and outlet connections to the annular space.

8. A container as claimed in Claim 7 wherein the core member is formed as a substantially solid member which forms a heat sink.

9. A container as claimed in Claim 8 wherein the core member is a synthetic plastic.

FIG.1

FIG.2

FIG.3

FIG.4

FIG.5

FIG.7

FIG.6

EP 0 312 252 A2